# EUROPÄISCHE PATENTSCHRIFT

(11) **EP 2 855 119 B1**
(45) Veröffentlichungstag und Bekanntmachung des Hinweises auf die Patenterteilung: **24.02.2016**
(21) Anmeldenummer: 13726538.5
(22) Anmeldetag: 04.06.2013
(51) Int. Cl.: B29C 67/00, B29L 31/00

(54) **VERFAHREN ZUM AUFBAU EINES DREIDIMENSIONALEN FORMKÖRPERS**
METHOD FOR CREATING AN 3D OBJECT
PROCÉDÉ DESTINÉ À LA CRÉATION D'UN OBJET TRIDIMENSIONNEL

(30) Priorität: 04.06.2012 EP 12170721
(43) Veröffentlichungstag der Anmeldung: 08.04.2015
(73) Patentinhaber: Ivoclar Vivadent AG, 9494 Schaan (LI); Technische Universität Wien, 1040 Wien (AT)
(72) Erfinder: EBERT, Jörg, 9470 Buchs (CH); WACHTER, Wolfgang, CH-9494 Schaan (LI); ROHNER, Gottfried, CH-9450 Altstätten (CH); STAMPFL, Jürgen, A-1050 Wien (AT)
(74) Vertreter: UEXKÜLL & STOLBERG
(86) Internationale Anmeldenummer: PCT/EP2013/061449
(87) Internationale Veröffentlichungsnummer: WO 2013/182547

(56) Entgegenhaltungen:
- EP-A1- 1 314 540
- EP-A1- 2 199 065
- EP-A2- 2 455 211
- WO-A1-90/03893
- WO-A1-2010/045951
- WO-A2-2004/106041
- US-A- 5 677 107
- US-A1- 2006 173 541
- US-A1- 2008 171 284

## Beschreibung

Die Erfindung betrifft ein Verfahren zum Aufbau eines Formkörpers aus flüssigem, photopolymerisierbarem Material unter Anwendung einer lithographiebasierten generativen Fertigung (Rapid Prototyping), bei dem an einer Bauplattform eine Schicht aus viskosem, flüssigen Material definiert wird, die Schicht in einem Belichtungsgebiet mit vorgegebener Kontur durch Belichten polymerisiert wird, an der polymerisierten Schicht eine weitere Schicht aus photopolymerisierbarem Material definiert wird, die zuletzt definierte Schicht in einem Belichtungsgebiet mit für die zuletzt definierte Schicht vorgegebener Kontur durch Belichten polymerisiert wird, und die letzten beiden Schritte wiederholt werden, bis durch die Abfolge von ausgehärteten Schichten mit schichtweise vorgegebenen Konturen ein Formkörper mit vorgegebener Form gebildet ist, wobei auf mindestens eine Schicht Farbe innerhalb der vorgegebenen Kontur aufgebracht wird, wobei die Bauplattform verfahrbar aufgehängt ist und die Bauplattform nach der Polymerisierung einer Schicht in einer Bearbeitungsstation zum Polymerisieren einer Schicht durch Verfahren zu einer Farbaufbringungsstation als weiterer Bearbeitungsstation geführt wird, in der ortsselektiv Farbe auf die zuletzt gebildete Schicht aufgebracht wird, wonach die Bauplattform wieder zu der Bearbeitungsstation zum Polymerisieren einer weitern Schicht verfahren wird.

Ein Verfahren zum Aufbau eines Formkörpers ist aus WO 2010/045950 A1 bekannt, die sich insbesondere auf den Aufbau von Dentalrestaurationen aus flüssigen, photopolymerisierbaren Materialien, die hohe Viskosität aufweisen können. Bei dem bekannten Verfahren wird eine Bauplattform vertikal beweglich über einem Wannenboden gehalten, der lichtdurchlässig ausgebildet ist. Unterhalb des Wannenbodens befindet sich eine Belichtungseinheit. Die Bauplattform wird zunächst in das photopolymerisierbare Material soweit abgesenkt, bis zwischen der Bauplattform und dem Wannenboden nur noch eine Schicht mit der gewünschten Schichtdicke aus photopolymerisierbarem Material verbleibt. Anschließend wird diese Schicht mit einer vorgegebenen Kontur durch die Belichtungseinheit belichtet und dadurch ausgehärtet. Nach Anheben der Bauplattform wird photopolymerisierbares Material aus der Umgebung nachgeführt und die Bauplattform erneut abgesenkt, wobei die Absenkung so gesteuert wird, dass der Abstand zwischen der zuletzt gebildeten Schicht und dem Wannenboden eine Schicht mit der gewünschten Dicke definiert. Danach werden die letzten Schritte so oft wiederholt, bis durch die aufeinanderfolgende Aushärtung von Schichten mit jeweils vorgegebener Kontur ein Formkörper mit der gewünschten Form hergestellt ist.

In DE 698 07 236 T2 wird die Herstellung von Formkörpern beschrieben, wobei pulverförmige Materialien schichtweise aufgebracht und ortsselektiv eine Flüssigkeit als Bindemittel aufgebracht wird. Die Flüssigkeit, die auf jede Schicht aus feinpulverigem Material aufgetragen wird, wird vorzugsweise in Form von einem oder mehreren feinen Tröpfchenstrahlen aufgetragen. Weiter wird erwähnt, dass die Flüssigkeit in Form einer Mehrzahl von feinen Tröpfchenstrahlen aufgetragen wird, wobei die Flüssigkeiten in den verschiedenen Strahlen verschiedene Farben besitzen. Dies kann dadurch bewirkt werden, indem ein an sich bekannter Tintenstrahldrucker verwendet wird. Hier wird also das Bindemittel ortsselektiv gleichzeitig mit der gewünschten Farbe aufgebracht. Ähnliche Verfahren sind in DE 697 16 946 T3 und DE 603 10 600 T2 beschrieben.

Die zuvor beschriebenen Verfahren gehören zu den 3D-Drucktechniken (Pulverbett). Der Eintrag von farbigem Bindemittel in ein Pulverbett führt zwar zu farbigen Bauteilen, deren Eigenschaften sind jedoch in verschiedener Hinsicht unbefriedigend. Bei den 3D-Drucktechniken werden die Granulate entweder eingefärbt und/oder die Pulveroberflächen belegt. In beiden Fällen kommt es durch Kapillarkräfte zu einem unkontrollierten Eindringen und Verlaufen der Farbe, so dass die Einfärbung nicht ortsselektiv bleibt. Eine Einfärbung ist hier also stets mit einem Verlaufen der Farbe aufgrund der Eigenschaften einer losen Pulverschüttung verbunden. Das Endprodukt von 3D-Drucktechniken ist stets ein poröser Grünkörper, welcher beispielsweise unter Verwendung keramischer Partikel nicht zu einem dichten Gefüge mit entsprechenden Eigenschaften gesintert werden kann. Hier bieten sich lediglich zusätzliche Infiltrationsschritte an, die potentiell zu einer weiteren "Verschleppung" der Farbkörper führen können.

Aus EP 2 455 211 A2 ist ein Verfahren nach dem Oberbegriff von Anspruch 1 bekannt, bei dem sukzessive Schichten aus photopolymerisierbarem Material durch Belichtung ausgehärtet werden. Nach dem Aushärten einer Schicht wird der aufzubauende Formkörper aus der Belichtungsstation zu einer Farbaufbringungsstation verfahren, in der selektiv Farbe auf die letzte Schicht aufgebracht wird. Der Verfahren erfolgt durch eine lineare, horizontale Bewegung, durch die der Formkörper zwischen den auf Abstand zueinander liegenden Bearbeitungsstationen hin und her gefahren wird.

Es ist Aufgabe der vorliegenden Erfindung, ein Verfahren zum schichtweisen Aufbau eines Formkörpers aus flüssigem, photopolymerisierbarem Material anzugeben, der mit einer gewünschten ortsabhängigen Einfärbung aufbaubar ist, wobei die Bearbeitungsschritte beim Aufbau in einer räumlich kompakten Anordnung und in zeiteffizienter Weise, die grundsätzlich eine parallele Bearbeitung mehrerer Formkörper ermöglicht, ausführbar sein sollen. Insbesondere soll das Verfahren zum Aufbau von Formkörpern, die als Dentalrestaurationen dienen können, einsetzbar sein.

Zur Lösung dieser Aufgabe dient das Verfahren mit den Merkmalen des Patentanspruchs 1. Vorteilhafte Ausführungsformen der Erfindung sind in den Unteransprüchen aufgeführt.

Erfindungsgemäß wird das Verfahren der Bauplattform zwischen verschiedenen Bearbeitungsstationen durch Drehen eines die Bauplattform an seinem Umfang haltenden, trommelförmigen Trägers um eine horizontale oder vertikale Drehachse ausgeführt, um dessen Drehachse herum Bearbeitungsstationen in Drehrichtung verteilt angeordnet sind. Dadurch wird einerseits die Ausführung des Verfahrens in einem Revolvermechanismus in einer kompakten Anordnung ermöglicht, da zwei (oder mehr) sequentiell zu durchlaufende Bearbeitungsstationen in Umfangsrichtung verteilt um den trommelförmigen Träger angeordnet werden können und nicht linear hintereinander. Außerdem wird dadurch grundsätzlich die Möglichkeit eröffnet, mehrere Bauplattformen entsprechend um den Umfang des trommelförmigen Trägers anzuordnen, wobei die Bauplattformen dann in den Bearbeitungsstationen parallel bearbeitet werden können.

Vorzugsweise erfolgt das Aufbringen der Farbe mit variierenden Farben mit vorgegebener Ortsabhängigkeit innerhalb der vorgegebenen Kontur.

In einer bevorzugten Ausführungsform wird die Farbe auf eine Schicht nach deren Polymerisierung und vor dem Aufbringen einer weiteren Schicht aufgebracht. Vorteile des Bedruckens einer bereits polymerisierten Schicht liegen in der Kontrolle der Tropfenausbreitung und des Benetzungsverhaltens auf der polymerisierten Oberfläche. Nach möglicher Trocknung bzw. Fixierung der aufgebrachten farbgebenden Komponenten wie Farbpigmenten, die dispergiert oder suspendiert sein können, oder Farbstoffen, die gelöst sein können, zusammengefasst im folgenden als Farbe bezeichnet, verbleiben diese beim erneuten Eintauchen in das photopolymerisierbare Material nach ihrer Aushärtung an Ort und Stelle und werden durch Polymerisieren der nächsten Schicht eingebunden.

Alternativ erfolgt die Farbaufbringung auf eine definierte Schicht aus photopolymerisierbarem Material vor deren Aushärtung. Vorzugsweise wird die aufgebrachte Farbschicht, wenn nötig, fixiert, was bei Suspensionen und Lösungen in photopolymerisierbarem Material durch Belichten und bei Suspensionen von Farbpigmenten bzw. Lösung von Farbstoffen in Lösungsmitteln durch Verdampfen des Lösungsmittels erfolgt. Da dieser Fixierungs- oder Aushärtungsschritt vorzugsweise unmittelbar auf den Aufbringungsschritt folgt, bleibt die Farbverteilung ohne merkliche Diffusion oder Ausbreitung der aufgebrachten Farbverteilung erhalten. Auch in dieser Ausführungsform ist es bevorzugt, dass nach der Verfestigung einer Schicht eventuell noch anhaftendes nicht verfestigtes farbgebendes Material in einem geeigneten Reinigungsschritt zu entfernen, z.B. durch Absaugen oder Abblasen.

Die Farbaufbringung kann durch einen Farbdrucker, z.B. einen Tintenstrahldrucker, direkt auf die Schicht erfolgen. Die Farbe kann auch durch Durchlaufen einer Reihe von hintereinander angeordneten Düsen bzw. Druckköpfen mit je mindestens einer Düse aufgebracht werden, wobei den Düsen bzw. Druckköpfen unterschiedliche Farben zugeordnet sind.

Das Aufbringen der Farbe kann alternativ indirekt durch ein Folientransferverfahren erfolgen, bei dem die Farbe zunächst ortsselektiv auf eine Folie aufgebracht und von dort auf die zu färbende Schicht übertragen wird. Die Übertragung kann z.B. durch Adhäsion oder Verwendung einer Farbfixierstation unter Fixierung durch Belichten durch die Folie erfolgen.

Vorzugsweise wird das photopolymerisierbare Material an der Unterseite der Bauplattform durch Belichten von unten' durch einen durchsichtigen Wannenboden polymerisiert. Die Bauplattform wird relativ zu dem Wannenboden nach jedem Belichtungsschritt angehoben, und es wird polymerisierbares Material zur Definition einer weiteren Schicht nachgeführt. Vorzugsweise wird nach Nachführung des photopolymerisierbaren Materials die Bauplattform, falls vorhanden, mit den daran gebildeten Schichten, wieder in das nachgeführte photopolymerisierbare Material abgesenkt, so dass durch Einstellung des Abstands über dem Wannenboden eine Schicht mit vorgegebener Dicke definiert wird. In dieser Ausführungsform ist es besonders vorteilhaft, wenn die Drehachse horizontal ausgerichtet ist. Dann kann der aufzubauende Formkörper an der Bauplattform von unten belichtet werden, der Träger dann zur Farbaufbringungstation gedreht und dort von oben bedruckt werden, wenn diese der Belichtungsstation um 180° um die Drehachse des trommelförmigen Trägers gedreht gegenüberliegt.

Vorzugsweise wird die Bauplattform wird nach der Polymerisation einer Schicht durch Drehen des trommelförmigen Trägers zu einer Reinigungsstation als nächster Bearbeitungsstation überführt, in der überschüssiges polymerisierbares Material, das in dem letzten Belichtungsschritt nicht ausgehärtet worden ist, entfernt wird. Anschließend wird die Bauplattform weiter zu der Farbaufbringungsstation als nächster Bearbeitungsstation durch Drehen des trommelförmigen Trägers gefahren, in der ortselektiv Farbe auf die zuletzt gebildete Schicht aufgebracht wird.

Vorzugsweise wird die Bauplattform nach der Farbaufbringung in der Farbaufbringungsstation zu einer Farbfixierstation als nächster Bearbeitungsstation durch Drehen des trommelförmigen Trägers verfahren, in der die aufgebrachte Farbe durch Verfestigung fixiert wird, bevor die Bauplattform wieder zur Bearbeitungsstation zum Polymerisieren einer Schicht hin gedreht wird, wo eine weitere Schicht aus photopolymerisierbarem Material definiert und polymerisiert wird.

Vorzugsweise erfolgt das Verfahren der Bauplattform zwischen zwei Bearbeitungsstationen durch Drehen des die Bauplattform haltenden Trägers um dessen vertikale Drehachse und das Verfahren zwischen zwei anderen Bearbeitungsstationen durch Drehen der Bauplattform um eine zur vertikalen Drehachse des Trägers senkrechte, horizontale Drehachse um 180°, so dass aufeinanderfolgend eine Bearbeitung von unten und von oben erfolgt.

Vorzugsweise wird auf beiden gegenüberliegenden Oberflächen der Bauplattform jeweils ein Formkörper aufgebaut und erfolgt die Bearbeitung der beiden Formkörper von unten und oben gleichzeitig.

Vorzugsweise ist eine weitere Bauplattform drehbar zusammen mit der ersten Bauplattform an dem trommelförmigen Träger in dessen Umfangsrichtung auf Abstand zur ersten so aufgehängt, dass sich die weitere Bauplattform in der Reinigungs- oder Farbaufbringungsstation befindet, wenn die erste Bauplattform sich in einer Station zur Definition einer weiteren Schicht befindet.

Vorzugsweise sind mehrere Bauplattformen um die Drehachse verteilt an dem trommelförmigen Träger so aufgehängt, dass, wenn sich eine erste Bauplattform zur Polymerisation einer weiteren Schicht gegenüber einer Belichtungseinheit befindet, eine zweite Bauplattform sich in der Reinigungsstation befindet, eine dritte Bauplattform sich in der Farbaufbringungsstation befindet und eine vierte Bauplattform sich in der Farbfixierstation befindet.

Vorzugsweise erfolgt die Bearbeitung der vier entstehenden Formkörper an den vier Bauplattformen zeitlich parallel durch Belichtung, durch Reinigung in der Reinigungsstation, durch Farbaufbringung in der Farbaufbringungsstation und durch Farbaushärtung in der Farbfixierstation erfolgt.

Es kann Fälle geben, in denen es nicht immer möglich ist, alle anhaftenden Monomerreste in einer Reinigungsstation berührungslos (z.B. durch Absaugen, Abblasen) zu entfernen. Es ist daher bevorzugt, die farbgebenden Komponenten mit UV-Licht (Spektrum 200 - 410 nm) auszuhärten bzw. zu polymerisieren oder die aufgebrachte Farbe durch Verdampfen von Lösungsmittel zu trocknen, während der eigentliche Bauprozess unter Verwendung von sichtbarem Licht (Spektrum 380 - 780 nm) stattfindet oder umgekehrt. Entsprechende Additive, wie Absorber und Initiatoren sind gemäß dem bevorzugten Wellenlängenspektrum auszuwählen.

Vorzugsweise wird im Bereich von Überhängen, d.h. wenn die aktuell auszuhärtende Schicht an wenigstens einem Randbereich über die letzte zuvor ausgehärtete Schicht vorsteht, der über die zuletzt ausgehärtete Schicht hervorstehende Bereich mittels Energie der Belichtungswellenlänge absorbierendem Material geschützt, so dass es beim Belichten des überstehenden Bereichs eine Polymerisation in dem darunterliegenden Bereich der zuletzt ausgehärteten Schicht vermieden wird.

Es ist bevorzugt, wenn es beim Absenken der Bauplattform mit dem daran bereits anhaftenden Teil des Formkörpers in das photopolymerisierbare Material zur Definition einer weiteren auszuhärtenden Schicht nicht zu einer merklichen Materialverdrängung aus dem Zwischenraum zwischen der zuletzt gebildeten Schicht und dem Wannenboden kommt, damit es zu keiner unakzeptablen Verdrängung von Material kommt, auf dem bereits Farbe aufgebracht ist. Daher sollte die Schicht aus photopolymerisierbaren Material auf dem Wannenboden schon vor der Einfärbung möglichst genau die Dicke der auszuhärtenden Schicht haben, so dass kein photopolymerisierbares Material nach der Farbaufbringung verdrängt werden muss und der restliche Anteil des photopolymerisierbaren Materials in der Wanne nicht durch verdrängte Farbstoffe verunreinigt wird. Um eine Schicht mit einer gewünschten Schichtdicke so zu definieren, kann eine Rakel oder ein Spin-Coating-Verfahren eingesetzt werden, wodurch eine Schicht mit genau der gewünschten Schichtdicke erzeugt wird.

Ein indirektes Folientransferverfahren kann in einer weiteren Ausführungsform auch dazu dienen, photopolymerisierbares Material und optional Farbe bereitzustellen. Hierbei wird zunächst ein dünner Film photopolymerisierbaren Materials auf die Folie aufgebracht, z.B. über ein Rakelsystem. Die Folie wird weiter transportiert und an einer Farbaufbringungsstation die Farbe auf der Oberfläche definiert und optional mittels einer Farbfixierstation fixiert. Anschließend kann die gefärbte Schicht photopolymerisierbaren Materials auf die Bauplattform oder die zuletzt daran ausgehärtete Schicht übertragen und durch Belichtung ausgehärtet werden.

Die Erfindung wird im Folgenden anhand eines Ausführungsbeispiels in den Zeichnungen erläutert, in denen:
Figuren 1 bis 4 Seitenansichten einer Vorrichtung zur Ausführung eines erfindungsgemäßen Verfahrens in aufeinanderfolgenden Verfahrensschritten zeigen,
Figuren 5 und 6 eine Vorrichtung zur Ausführung einer alternativen Verfahrensweise in Draufsicht von oben und in Seitenansicht zeigen,
Fig. 7 eine seitliche Schnittansicht auf eine Vorrichtung zur Ausführung einer weiteren alternativen Verfahrensweise zeigt und
Figuren 8 und 9 Seitenansichten der Vorrichtung aus Fig. 7 zeigen.

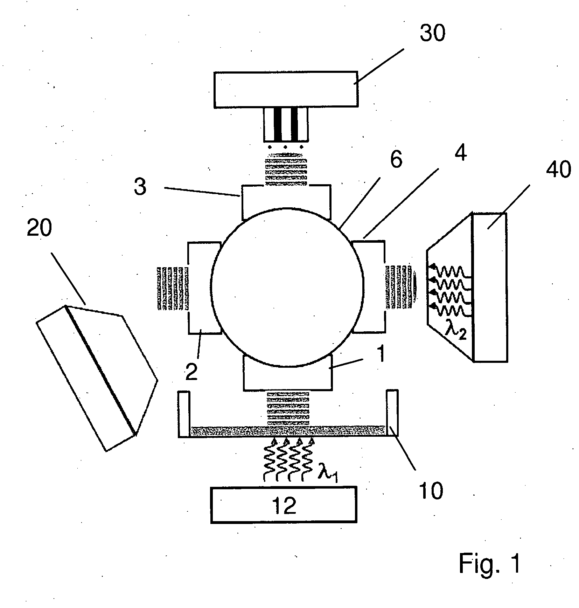

Es wird zunächst die Verfahrensweise zum sukzessiven Aufbau des Formkörpers beschrieben, bevor auf die weiteren Schritte im Zusammenhang mit der vorliegenden Erfindung eingegangen wird. Die in Fig. 1 dargestellte Vorrichtung weist eine Wanne 10 auf, deren Wannenboden zumindest in einem Teilbereich durchsichtig oder durchlässig für Licht einer Wellenlänge λ₁ ist. Dieser Teilbereich des Wannenbodens überdeckt zumindest die Ausdehnung der Fokusebene einer Belichtungseinheit 12, die unter dem Wannenboden angeordnet ist. Die Belichtungseinheit 12 weist eine Lichtquelle und einen Lichtmodulator auf, mit dem die Intensität gesteuert von einer Steuereinheit ortsselektiv eingestellt wird, um ein Belichtungsfeld mit der für die momentan zu bildende Schicht gewünschten Geometrie an dem Wannenboden zu erzeugen. Alternativ kann in der Belichtungseinheit auch ein Laser verwendet werden, dessen Lichtstrahl über einen beweglichen Spiegel, der von einer Steuereinheit gesteuert wird, oder einen xy-Laserplotter das Belichtungsfeld mit dem gewünschten Intensitätsmuster sukzessive abtastet.

Der Belichtungseinheit 12 gegenüber ist über der Wanne 10 eine Bauplattform 1 vorgesehen, die von einem nicht dargestellten Hubmechanismus getragen wird, so dass sie in höhenverstellbarer Weise über dem Boden der Wanne 10 im Bereich der Belichtungseinheit 12 gehalten wird.

In der Wanne 10 befindet sich eine Füllung aus hochviskosem photopolymerisierbarem Material. Der Materialspiegel der Füllung sollte nur geringfügig höher als die gewünschte Dicke der zu definierenden Schicht sein. Zur Definition einer Schicht aus photopolymerisierbarem Material wird in folgender Weise vorgegangen. Die Bauplattform 1 wird durch den Hubmechanismus in gesteuerter Weise abgesenkt, so dass (vor dem ersten Belichtungsschritt) ihre Unterseite in die Füllung des photopolymerisierbarem Materials eintaucht und sich dem Wannenboden soweit nähert, dass zwischen der Unterseite der Bauplattform 1 und dem Wannenboden genau die gewünschte Schichtdicke verbleibt. Nach Einstellung der Schichtdicke folgt die für diese Schicht gewünschte ortsselektive Belichtung durch die Belichtungseinheit 12, um sie in der gewünschten Form auszuhärten. Nach der Bildung der Schicht wird die Bauplattform 1 mittels des Hubmechanismus durch Anheben derselben oder auch durch Absenken der Wanne 10 wieder von der Wanne 10 getrennt. Anschließend wird photopolymerisierbares Material in den belichteten Bereich nachgeführt, um wieder eine Schicht aus photopolymerisierbarem Material zu bilden, die nur geringfügig dicker als die für die nächst zu bildende Schicht gewünschte Schichtdicke ist. Eine solche Verteilung kann zum Beispiel durch eine Rakel oder durch ein sogenanntes Spin-Coating-Verfahren erfolgen, bei dem eine vorgegebene Materialmenge in der Mitte der Wanne 10 aufgebracht wird und die Bauplattform dann in Rotation versetzt wird, um das photopolymerisierbare Material zu einer Schicht in der gewünschten Dicke auseinanderzuziehen. Das zugeführte Material stellt die Basisfarbe der entsprechenden Schicht dar. Dieses kann über den Bauprozess variiert werden.

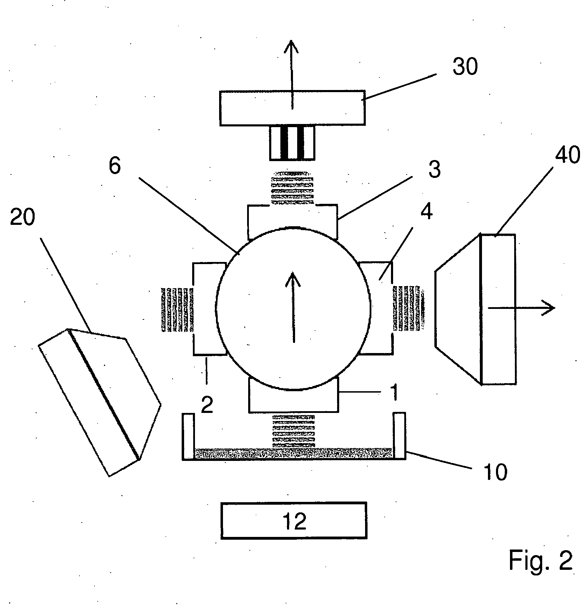

In Figur 2 ist durch den geradlinigen Pfeil das Anheben der Bauplattform nach dem Aushärten einer aktuellen Schicht angedeutet.

Diese Schritte werden nachfolgend mehrfach wiederholt, wobei dann jeweils der Abstand zwischen der Unterseite der zuletzt gebildeten Schicht zum Wannenboden auf die gewünschte Schichtdicke eingestellt wird und daraufhin die nächste Schicht in der gewünschten Weise ortsselektiv ausgehärtet wird.

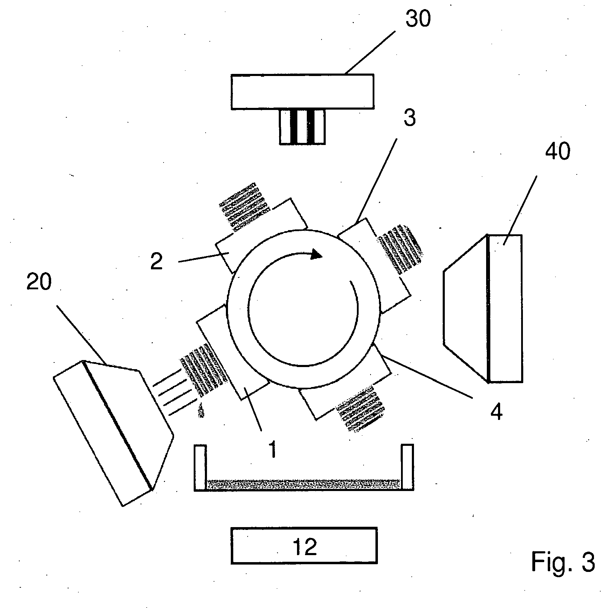

Bei dem vorliegenden erfindungsgemäßen Verfahren finden allerdings zwischen den Belichtungsschritten aufeinanderfolgender Schichten an der Bauplattform 1 weitere Zwischenschritte in verschiedenen Bearbeitungsstationen statt. Zu diesem Zweck ist die Bauplattform 1 um eine horizontale Achse drehbar an einem trommelförmigen zylindrischen Träger 6 aufgehängt. In dem dargestellten Ausführungsbeispiel steht die Drehachse des Trägers 6 senkrecht zur Figurenebene. Um den trommelförmigen Träger 6 herum sind weitere Bearbeitungsstationen angeordnet, und zwar eine Reinigungsstation 20, eine Farbaufbringungsstation 30 und eine Farbfixierstation 40. Die Bauplattform 1 wird den genannten Bearbeitungsstationen nacheinander zugeführt. Dabei wird die Bauplattform 1 mit dem daran bereits gebildeten Teil des Formkörpers zunächst durch Drehung des Trägers 6 zu einer Reinigungsstation 20 befördert, in der anhaftende Reste von unpolymerisiertem Material, das nicht ausgehärtet worden ist, entfernt werden. Dies kann zum Beispiel mechanisch durch Abstreifen oder vorzugsweise kontaktlos durch Abblasen oder Absaugen geschehen. Dieser Bearbeitungsschritt ist in Fig. 3 gezeigt.

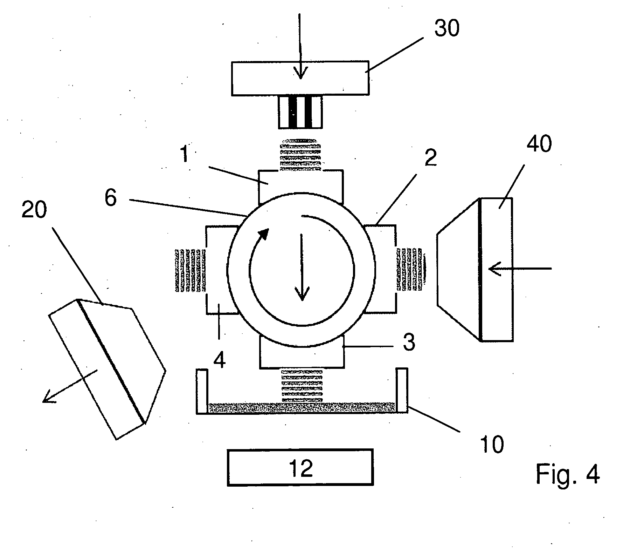

Nach der Reinigung wird die Bauplattform 1 weiter zu der Farbaufbringungsstation 30 gedreht, in der wie in Fig. 4 gezeigt ortsselektiv Farbe auf die zuletzt gebildete Schicht aufgebracht wird. Dies kann zum Beispiel durch ein Tintenstrahldruckverfahren erfolgen, bei dem eine Suspension von Farbpartikeln in Monomermaterial in dem gewünschten Muster aufgebracht wird. Daraufhin wird die Bauplattform 1 weiter zu der Farbfixierstation 40 gedreht, in der die aufgebrachte Farbe fixiert wird. Falls die Farbe in Form einer Suspension in photopolymerisierbarem Material aufgebracht wird, kann die Aushärtung durch Belichtung erfolgen. In alternativen Ausführungsformen kann die Farbe auch als Lösung aufgebracht werden, die in der Farbfixierstation 40 einer Wärmebehandlung unterzogen wird, um das Lösungsmittel zum Verdampfen zu bringen. Grundsätzlich sind alle Vorrichtungen zur Deponierung der farbgebenden Komponenten in flüssiger oder fester Form anwendbar, wie z.B. auch Tampondruck im Falle des Folientransferverfahrens zur Bereitstellung der Farbe und Aufnahme durch die Plattform bzw. Bauteiloberfläche.

Danach wird die Bauplattform 1 wieder in die in Fig. 1 gezeigte Stellung gedreht, in der eine neue Schicht aus photopolymerisierbarem Material zwischen der zuletzt gebildeten Schicht und dem Wannenboden definiert und polymerisiert wird. Danach beginnt der beschriebene Zyklus von vorne und wird solange wiederholt, bis der sukzessive gebildete Formkörper die endgültig gewünschte Form erreicht hat.

In dem dargestellten Ausführungsbeispiel sind an dem trommelförmigen Träger 6 drei weitere Bauplattformen 2, 3 und 4 aufgehängt. In dem Ausführungsbeispiel sind die Bauplattformen 1 - 4 jeweils um 90° zueinander um den Träger 6 versetzt angeordnet. Diese Ausführungsform ermöglicht es, dass an den Bauplattformen 1 - 4 Bearbeitungsschritte in verschiedenen Bearbeitungsstationen parallel durchgeführt werden. In der in Fig. 1 gezeigten Stellung wird an der Bauplattform 1 eine Schicht mit der gewünschten Dicke zwischen der zuletzt gebildeten Schicht und dem Wannenboden definiert und erfolgt deren Aushärtung durch Belichten mit Licht der Wellenlänge λ₁. Parallel dazu wird in der Farbaufbringungsstation 30 auf die zuletzt gebildete Schicht des an der Bauplattform 3 entstehenden Formkörpers Farbe aufgebracht. Parallel dazu wird die zuvor aufgebrachte Farbe auf der letzten Schicht des an der Bauplattform 4 entstehenden Formkörpers in der Farbfixierstation 40 durch eine weitere Belichtung mit der Wellenlänge λ₂ ausgehärtet oder fixiert. In diesem Ausführungsbeispiel finden also drei sukzessive Bearbeitungsschritte an drei der Bauplattformen in verschiedenen Bearbeitungsstationen gleichzeitig statt. In dem dargestellten Ausführungsbeispiel ist die Reinigungsstation nicht um 90° gegenüber der Wanne 10 versetzt, so dass der in Fig. 3 gezeigte Reinigungsschritt zum Entfernen von anhaftendem, unausgehärtetem Material als gesonderter Arbeitsschritt stattfindet. Grundsätzlich könnte die Reinigungsstation 20 allerdings auch um 90° gegenüber dem Wannenboden gedreht angeordnet sein, so dass dann die einzelnen Bearbeitungsschritte an den Bauplattformen 1 - 4 gleichzeitig oder parallel zueinander durchgeführt werden könnten.

Die Wanne 10 und die Bearbeitungsstationen 20, 30 und 40 sind in der Figurenebene in gesteuerter Weise verschiebbar relativ zu den Bauplattformen, so dass sie ihre Bearbeitungsstellung jeweils an das Stadium des Aufbauvorgangs der jeweils an den Bauplattformen 1 - 4 entstehenden Formkörper anpassen können.

In dem dargestellten Ausführungsbeispiel ist der Träger 6 der Bauplattformen 1 - 4 um eine horizontale (senkrecht zur Figurenebene stehende) Achse drehbar aufgehängt, so dass eine revolverartige Anordnung gegeben ist.

In dem dargestellten Ausführungsbeispiel wird jede an einer Bauplattform durch Aushärten neu gebildete Schicht durch Farbaufbringung in der Farbaufbringungsstation 30 in der gewünschten Weise bedruckt. Allerdings muss nicht jede Schicht an dem entstehenden Formkörper bedruckt werden, sondern können auch einzelne oder mehrere Schichten ohne Farbaufbringung gebildet werden.

Die Farbaufbringung kann auch zu einem weiteren Zweck eingesetzt werden, und zwar wenn der zu bildende Formkörper Überhänge aufweist. Als Überhang wird hier die Situation bezeichnet, in der eine momentan zu bildende Schicht in wenigstens einer Richtung über die darunterliegende ausgehärtete Schicht vorsteht. In diesem Fall kann die zuletzt definierte Schicht in den Bereichen, wo Überhänge der nächsten zu bildenden Schicht entstehen werden, in diesen Bereichen so bedruckt werden, dass diese Bereiche abgedeckt werden und so bei der Belichtung der nächsten zu bildenden, überstehenden Schicht im Bereich der Überhänge keine Polymerisierung der dahinterliegenden zuletzt gebildeten Schicht stattfinden kann, da sie durch die aufgebrachte Farbe abgedeckt ist.

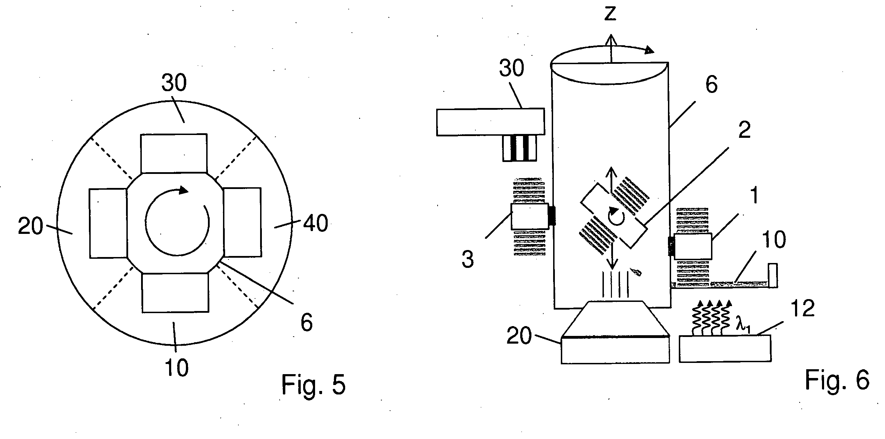

Fig. 5 zeigt eine Draufsicht von oben auf eine zur Ausführung einer alternativen Verfahrensweise geeignete Vorrichtung. Die Vorrichtung hat einen um eine vertikale Drehachse drehbar aufgehängten zentralen trommelförmigen Träger 6, an dem in 90° Abständen vier Bauplattformen aufgehängt sind (die Drehachse steht senkrecht zu Figurenebene). Um den trommelförmigen Träger 6 herum (über oder unter unter den Bauplattformen) befinden sich ebenfalls in 90° Abstand die vier Bearbeitungsstationen, nämlich Wanne 10 zur Schichtdefinition einer zu polymerisierenden Schicht aus photopolymerisierbarem Material und zur Belichtung und Aushärtung der so definierten weiteren Schicht, Reinigungsstation 20, Farbaufbringungsstation 30 und Farbfixierstation 40.

Fig. 6 zeigt eine seitliche Ansicht auf die Vorrichtung aus Fig. 5. Die Bauplattformen sind an dem drehbaren trommelförmigen Träger 6 aufgehängt, der um eine vertikale Z-Achse drehbar ist, um die Bauplattformen durch Drehung des zentralen Trägers 6 von einer Bearbeitungsstation zur nächsten zu bewegen. In dieser Ausführungsform können die Bauplattformen zusätzlich um eine horizontale, senkrecht zur Z-Achse stehende Achse drehbar an dem zentralen Träger 6 aufgehängt sein. Diese Ausführungsform ermöglicht es, jeweils zwei Formkörper auf beiden Seiten jeder Bauplattform aufzubauen, so dass insgesamt 8 Bauplattformenoberfächen vorhanden sind, wobei jeweils vier davon nach unten und vier nach oben weisen.

In dieser Ausführungsform können die Bauplattformen nach einem Bearbeitungsschritt um 180° um die genannte horizontale Achse am Träger 6 gedreht werden, so dass eine Bearbeitung von oben und unten erfolgen kann. Diese Ausführungsform kann zum Beispiel in der Reinigungsstation 20 vorteilhaft sein, da so das Abfließen von überschüssigen, nicht ausgehärtetem Material durch die Schwerkraft unterstützt werden kann.

In der in Fig. 6 dargestellten Ausführungsform erfolgt das Belichten mit der Belichtungseinheit 12 von unten durch den Wannenboden der Wanne 10. Anschließend wird der Träger 6 um 90° zu der Reinigungsstation 20 gedreht. In der Reinigungsstation wird während des Belichtungsschrittes der Bauplattform 1 eine Bauplattform 2 gereinigt, wobei diese dabei um die senkrecht zur Z-Achse stehende horizontale Achse gedreht wird, um das Abfließen von über polymerisierbarem Material zu erleichtern. Währenddessen wird die Bauplattform 3 von oben in der Farbaufbringungsstation 30 bedruckt. Natürlich kann grundsätzlich das Drucken auch von unten erfolgen. Es muss für die konkrete Ausführungsform dann die Steuerung so eingestellt werden, dass die Bauplattform in der richtigen Orientierung zu der jeweiligen Bearbeitungsstation gestellt wird.

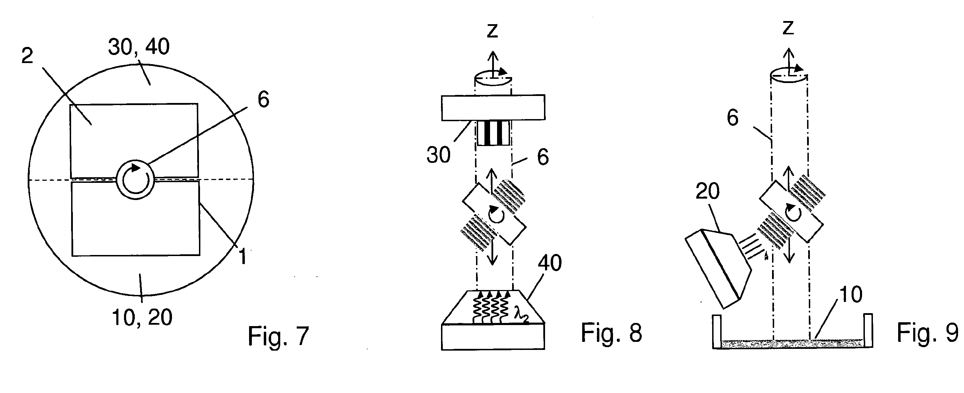

In den Fig. 7 bis 9 ist eine alternative Ausführungsform für eine zur Ausführung eines erfindungsgemäßen Verfahrens geeignete Vorrichtung gezeigt. Fig. 7 zeigt die Vorrichtung wiederum in der Draufsicht von oben, während in Fig. 8 und 9 schematische Seitenansichten gezeigt sind. Diese Ausführungsform unterscheidet sich von den vorhergehenden dadurch, dass die Belichtungsstation mit der Wanne 10 und die Reinigungsstation 20 räumlich zusammengefasst sind. Ebenso ist die Farbaufbringungsstation 30 räumlich mit der Farbfixierstation 40 zusammengefasst. Wie in Fig. 7 gezeigt, sind an dem zentralen Träger 6 zwei Bauplattformen 1, 2 diametral gegenüberliegend angeordnet. Die Bauplattform 1 befindet sich im Bereich der Belichtungsstation 10 und der Reinigungsstation 20, während sich die Bauplattform 2 im Bereich der Farbaufbringungsstation 30 und der Farbfixierstation 40 befindet. Fig. 8 zeigt die Vorrichtung im Bereich der Farbaufbringungsstation 30 und der Farbfixierstation 40 in Draufsicht. Die dargestellte Bauplattform ist an dem zentralen trommelförmigen Träger 6 um eine zur Z-Achse senkrechte, horizontale Achse drehbar aufgehängt. Dadurch kann zunächst eine Seite der Bauplattform der Farbaufbringungsstation 30 zugewandt liegen und die Farbe auf die oberste Schicht des Formkörpers auf dieser Seite der Bauplattform aufgebracht werden. Nach der Farbaufbringung kann die Bauplattform um 180° gedreht werden, so dass die Schicht, auf die gerade Farbe aufgebracht worden ist, dann nach unten auf die Farbfixierstation 40 zu gerichtet ist, so dass die aufgebrachte Farbe zum Beispiel durch Belichtung ausgehärtet werden kann.

In Fig. 9 ist die Vorrichtung im Bereich der Wanne 10 und der Reinigungsstation 20 gezeigt. Nachdem eine Schicht über dem Wannenboden durch Belichtung von unten an dem Formkörper ausgehärtet worden ist, wird die Bauplattform angehoben und um die horizontale Achse gedreht, so dass sie auf die Reinigungsstation 20 zu gerichtet ist. Nach der Reinigung wird dann der Träger 6 wieder um 180° gedreht, so dass nach dem Reinigungsschrift nun die Farbaufbringung und Aushärtung in der Farbaufbringungsstation 30 und Farbfixierstation 40 erfolgen können.

In den beschriebenen bevorzugten Ausführungsformen erfolgt die Belichtung von unten und ist die Bauplattform vertikal beweglich, um Schicht auf Schicht unter der Bauplattform aufzubauen. Die vorliegende Erfindung ist aber natürlich auch bei Belichtung von oben anwendbar. Ebenso kann das Bedrucken je nach Ausführungsform von oben oder von unten erfolgen. Das Fixieren der Farbe kann durch Belichtung bei Verwendung von polymerisierbarer Farbe erfolgten oder durch Verdampfung von Lösungsmittel bei Verwendung von in Lösungsmittel gelöster Farbe.

## Patentansprüche

1. Verfahren zum Aufbau eines Formkörpers aus photopolymerisierbarem Material unter Anwendung einer lithographiebasierten generativen Fertigung (Rapid Prototyping), bei dem an einer Bauplattform (1, 2, 3, 4) eine Schicht aus flüssigem, photopolymerisierbarem Material definiert wird, die Schicht in einem Belichtungsgebiet mit vorgegebener Kontur durch Belichten polymerisiert wird, an der polymerisierten Schicht einer weitere Schicht aus photopolymerisierbaren Material definiert wird, die zuletzt definierte Schicht in einem Belichtungsgebiet mit für die zuletzt definierte Schicht vorgegebener Kontur durch Belichten polymerisiert wird, und die letzten beiden Schritte wiederholt werden, bis durch die Abfolge von ausgehärteten Schichten mit schichtweise vorgegebenen Konturen ein Formkörper mit vorgegebener Form gebildet ist, wobei auf mindestens eine Schicht Farbe innerhalb der vorgegebenen Kontur aufgebracht wird, wobei die Bauplattform verfahrbar aufgehängt ist und die Bauplattform nach der Polymerisierung einer Schicht in einer Bearbeitungsstation zum Polymerisieren einer Schicht durch Verfahren zu einer Farbaufbringungsstation (30) als weiterer Bearbeitungsstation geführt wird, in der ortsselektiv Farbe auf die zuletzt gebildete Schicht aufgebracht wird, wonach die Bauplattform wieder zu der Bearbeitungsstation zum Polymerisieren einer weitern Schicht verfahren wird, **dadurch gekennzeichnet, dass** das Verfahren der Bauplattform zwischen verschiedenen Bearbeitungsstationen durch Drehen eines die Bauplattform an seinem Umfang haltenden, trommelförmigen Trägers (6) um eine horizontale oder vertikale Drehachse erfolgt, um dessen Drehachse herum Bearbeitungsstationen in Drehrichtung verteilt angeordnet sind.

2. Verfahren zum Aufbau eines Formkörpers nach Anspruch 1, **dadurch gekennzeichnet, dass** das Aufbringen der Farbe mit variierenden Farben mit vorgegebener Ortsabhängigkeit innerhalb der vorgegebenen Kontur erfolgt.

3. Verfahren zum Aufbau eines Formkörpers nach einem der vorhergehenden Ansprüche, **dadurch gekennzeichnet, dass** das Aufbringen der Farbe auf eine Schicht nach deren Polymerisierung und vor dem Aufbringen einer weiteren Schicht erfolgt.

4. Verfahren zum Aufbau eines Formkörpers nach einem der vorhergehenden Ansprüche, **dadurch gekennzeichnet, dass** das Aufbringen der Farbe durch einen Farbdrucker direkt auf die Schicht erfolgt.

5. Verfahren nach Anspruch 1, 2 oder 3, **dadurch gekennzeichnet, dass** das Aufbringen der Farbe indirekt durch ein Folientransferverfahren erfolgt, bei dem die Farbe zunächst ortsselektiv auf eine Folie aufgebracht und von dort auf die zu färbende Schicht übertragen wird.

6. Verfahren nach einem der vorhergehenden Ansprüche, **dadurch gekennzeichnet, dass** das photopolymerisierbare Material an der Unterseite der Bauplattform durch Belichten von unten durch einen durchsichtigen Wannenboden polymerisiert wird, dass die Bauplattform relativ zu dem Wannenboden nach jedem Belichtungsschritt angehoben wird und dass photopolymerisierbares Material zur Definition einer weiteren Schicht nachgeführt wird.

7. Verfahren zum Aufbau eines Formkörpers nach Anspruch 6, **dadurch gekennzeichnet, dass** nach Nachführung von photopolymerisierbarem Material die Bauplattform, falls vorhanden mit den daran gebildeten Schichten, wieder in das nachgefüllte photopolymerisierbare Material abgesenkt wird, so dass durch Einstellung des Abstands der zuletzt ausgehärteten Schicht über dem Wannenboden eine Schicht aus photopolymerisierbarem Material mit vorgegebener Dicke definiert wird.

8. Verfahren zum Aufbau eines Formkörpers nach einem der vorhergehenden Ansprüche, **dadurch gekennzeichnet**, die Bauplattform nach der Polymerisierung einer Schicht in der Bearbeitungsstation zum Aufbringen und Polymerisieren durch Drehen des trommelförmigen Trägers (6) zunächst zu einer Reinigungsstation (20) als nächster Bearbeitungsstation gedreht wird, in der überschüssiges photopolymerisierbares Material, das in dem letzten Belichtungsschritt nicht ausgehärtet worden ist, entfernt wird, bevor sie zur Farbaufbringungsstation (30) als nächster Bearbeitungsstation verfahren wird.

9. Verfahren zum Aufbau eines Formkörpers nach Anspruch 8, **dadurch gekennzeichnet, dass** die Bauplattform nach der Farbaufbringung in der Farbaufbringungsstation (30) zu einer Farbfixierstation (40) als weiterer Bearbeitungsstation durch Drehen des trommelförmigen Trägers (6) gedreht wird, in der die aufgebrachte Farbe durch Verfestigung fixiert wird, bevor die Bauplattform wieder zur Bearbeitungsstation zum Aufbringen und Polymeriseren einer Schicht hin gedreht wird, wo eine weitere Schicht von photopolymerisierbarem Material definiert und polymerisiert wird.

10. Verfahren nach Anspruche 1, **dadurch gekennzeichnet, dass** Verfahren der Bauplattform zwischen zwei Bearbeitungsstationen durch Drehen des die Bauplattform haltenden Trägers (6) um dessen vertikale Drehachse erfolgt und das Verfahren zwischen zwei anderen Bearbeitungsstationen durch Drehen der Bauplattform um eine Aufhängung am Träger (6) mit einer zur vertikalen Drehachse des Trägers (6) senkrechten, horizontalen Drehachse um 180° erfolgt, so dass aufeinanderfolgend eine Bearbeitung mit Orientierung nach unten und nach oben erfolgt.

11. Verfahren nach Anspruch 10, **dadurch gekennzeichnet, dass** auf beiden gegenüberliegenden Oberflächen der Bauplattform jeweils ein Formkörper aufgebaut wird und dass die Bearbeitung der beiden Formkörper von unten und oben gleichzeitig erfolgt.

12. Verfahren nach einem der Ansprüche 10 bis 11, **dadurch gekennzeichnet, dass** eine weitere Bauplattform drehbar zusammen mit der ersten Bauplattform an dem trommelförmigen Träger in dessen Umfangsrichtung auf Abstand zu der ersten so aufgehängt ist, dass sich die weitere Bauplattform in der Reinigungs- oder Farbaufbringungsstation befindet, wenn die erste Bauplattform sich in einer Station zur Definition einer weiteren Schicht befindet.

13. Verfahren nach der Anspruch 9 , **dadurch gekennzeichnet, dass** mehrere Bauplattformen um die Drehachse in Umfangsrichtung verteilt an dem trommelförmigen Träger (6) so aufgehängt sind, dass, wenn sich eine erste Bauplattform (1) in der Bearbeitungsstation zum Polymerisieren einer weiteren Schicht gegenüber einer Belichtungseinheit befindet, eine zweite Bauplattform (2) sich in der Reinigungsstation (20) als Bearbeitungsstation befindet, eine dritte Bauplattform (3) sich in der Farbaufbringungsstation (30) als Bearbeitungsstation befindet und eine vierte Bauplattform (4) sich in der Farbfixierstation (40) als Bearbeitungsstation befindet.

14. Verfahren nach Anspruch 13, **dadurch gekennzeichnet, dass** die Bearbeitung der vier entstehenden Formkörper an den vier Bauplattformen zeitlich parallel durch Belichtung, durch Reinigung in der Reinigungsstation (20), durch Farbaufbringung in der Farbaufbringungsstation (30) und durch Farbaushärtung in der Farbfixierstation (40) erfolgt.

15. Verfahren nach einem der vorhergehenden Ansprüche, **dadurch gekennzeichnet, dass** im Bereich von Überhängen, wo die aktuell auszuhärtende Schicht seitlich über die zuletzt gebildete Schicht vorsteht, der überstehende Bereich durch im Belichtungswellenlängenbereich absorbierendes Material abgedeckt wird, um Polymerisationen hinter der aktuell auszuhärtenden Schicht zu vermeiden.

16. Verfahren nach einem der vorhergehenden Ansprüche, **dadurch gekennzeichnet, dass** das photopolymerisierbare Material vor dem Belichten einer weiteren Schicht auf eine gewünschte Höhe über dem Wannenboden gebracht wird, indem die gewünschte Schichtdicke durch eine Rakel oder durch ein Spin-Coating-Verfahren eingestellt wird, so dass keine merkliche Materialverdrängung beim Absenken der Bauplattform zum Wannenboden zur Definition der auszuhärtenden Schicht auftritt.

17. Verfahren nach einem der Ansprüche 1 bis 6, **dadurch gekennzeichnet, dass** zum Aufbringen einer weiteren Schicht aus photopolymerisierbarem Material auf die Bauplattform oder die zuletzt daran ausgehärtete Schicht ein indirektes Folientransferverfahren angewendet wird, bei dem eine Schicht aus photopolymerisierbaren Material in der gewünschten Dicke auf einer Folie definiert und die Folie weiter transportiert wird, um die darauf definierte Schicht auf die Bauplattform oder die zuletzt daran ausgehärtete Schicht zu übertragen und durch Belichtung auszuhärten.

## Claims

1. A method for the construction of a shaped body from photopolymerizable material by using lithography-based generative production (rapid prototyping), in which a layer of liquid photopolymerizable material is defined on a production platform (1, 2, 3, 4), the layer is polymerized in an exposure region having a predetermined contour by exposure, a further layer of photopolymerizable material is defined on the polymerized layer, the layer defined last is polymerized by exposure in an exposure region having a predetermined contour for the layer defined last, and the latter two steps are repeated until a shaped body having a predetermined shape has been formed by the sequence of cured layers with contours predetermined layer by layer, wherein ink is applied onto at least one layer inside the predetermined contour, wherein the production platform is suspended moveably and wherein the production platform is brought, after the polymerization of a layer in a processing station for polymerizing a layer, by movement to an ink application station (30) as a further processing station in which ink is applied position-selectively to the layer formed last, after which the production platform is moved again to the processing station for polymerizing a further layer, **characterized in that** the movement of the production platform between various processing stations is carried out by rotating a drum-shaped carrier (6) which holds the production platform on its circumference, around a horizontal or vertical axis of rotation, wherein the processing stations are disposed distributed around the axis of rotation of the drum shaped carrier.

2. The method for the construction of a shaped body as claimed in claim 1, wherein the application of the ink is carried out with varying colors with predetermined position dependency inside the predetermined contour.

3. The method for the construction of a shaped body as claimed in one of the preceding claims, wherein the application of the ink on a layer is carried out after polymerization of the latter and before the application of a further layer.

4. The method for the construction of a shaped body as claimed in one of the preceding claims, wherein the application of the ink is carried out directly onto the layer by a color printer.

5. The method as claimed in claim 1, 2 or 3, wherein the application of the ink is carried out indirectly by a sheet transfer method, in which the ink is first applied position-dependently onto a sheet and then transferred from there onto the layer to be colored.

6. The method as claimed in one of the preceding claims, wherein the photopolymerizable material is polymerized on the lower side of the production platform by exposure from below through a transparent tank bottom, wherein the production platform is raised relative to the tank bottom after each exposure step and wherein photopolymerizable material for defining a further layer is replenished.

7. The method for the construction of a shaped body as claimed in claim 6, wherein, after replenishment of photopolymerizable material, the production platform, with the layers formed thereon if they exist, is lowered again into the replenished photopolymerizable material in such a way that a layer of photopolymerizable material having a predetermined thickness is defined by adjusting the distance of the layer cured last above the tank bottom.

8. The method for the construction of a shaped body as claimed in one of the preceding claims, wherein the production platform is first brought, after the polymerization of a layer in the processing station for applying and polymerizing, by rotating the drum-shaped carrier (6) first to a cleaning station (20) in which excess photopolymerizable material, which was not cured in the last exposure step, is removed before it is moved to the ink application station (30) as a next processing station.

9. The method for the construction of a shaped body as claimed in claim 8, wherein the production platform is after the ink application in the ink application station (30) transferred by rotation of the drum-shaped carrier (6) to an ink fixing station (40) in which the applied ink is fixed by solidification, before the production platform is rotated again to the processing station for applying and polymerizing a layer where a further layer of photopolymerizable material is defined and polymerized.

10. The method as claimed in claim 1, wherein the movement of the production platform between two processing stations is carried out by rotating the carrier (6) holding the production platform about its vertical rotation axis, and the movement between two other processing stations is carried out by rotating the production platform through 180° about a suspension from the carrier (6) with a horizontal rotation axis perpendicular to the vertical rotation axis of the carrier (6), so that processing is carried out successively with an orientation downward and upward.

11. The method as claimed in claim 10, wherein a shaped body is respectively constructed on both opposite surfaces of the production platform, and wherein the processing of the two shaped bodies is carried out simultaneously from below and above.

12. The method as claimed in one of claims 10 to 11, wherein a further production platform is suspended rotatably together with the first production platform from the drum-shaped carrier spaced apart in circumferential direction from the first production platform, in such a way that the further production platform lies in the cleaning or ink application station when the first production platform lies in a station for defining a further layer.

13. The method as claimed in claim 9, wherein a plurality of production platforms are suspended from the drum-shaped carrier (6) while being circumferentially about the rotation axis in such a way that when a first production platform (1) lies in the processing station for polymerization of a further layer in front of an exposure unit, a second production platform (2) lies in the cleaning station (20) as processing station, a third production platform (3) lies in the ink application station (30) as processing station and a fourth production platform (4) lies in the ink fixing station (40).

14. The method as claimed in claim 13, wherein the processing of the four resulting shaped bodies on the four production platforms is carried out chronologically in parallel by exposure, by cleaning in the cleaning station (20), by ink application in the ink application station (30) and by ink curing in the ink fixing station (40).

15. The method as claimed in one of the preceding claims, wherein in the region of overhangs where the layer currently to be cured protrudes laterally beyond the layer formed last, the protruding region is covered by material which is absorbent in the exposure wavelength range in order to avoid polymerization behind the layer currently to be cured.

16. The method as claimed in one of the preceding claims, wherein the photopolymerizable material is brought to a desired height above the tank bottom before the exposure of a further layer, by adjusting the desired layer thickness by a blade or by a spin-coating method, so that no significant material movement occurs when the production platform is being lowered toward the tank bottom in order to define the layer to be cured.

17. The method as claimed in one of claims 1 to 6, wherein for application of a further layer of photopolymerizable material onto the production platform or the layer cured last thereon, an indirect sheet transfer method is used in which a layer of photopolymerizable material is defined with the desired thickness on a sheet and the sheet is transported further in order for the layer defined thereon to be transferred onto the production platform, or the layer cured last thereon, and cured by exposure.

## Revendications

1. Procédé de création d'un objet tridimensionnel en matériau photopolymérisable par application d'une fabrication additive à base de lithographie (Rapid Prototyping), dans lequel on définit sur une plate-forme de construction (1, 2, 3, 4) une couche d'un matériau liquide photopolymérisable, on polymérise par éclairage la couche dans un domaine d'éclairage avec un contour prédéterminé, on définit sur la couche polymérisée une autre couche en matériau photopolymérisable, on polymérise par éclairage la couche définie en dernier lieu dans un domaine d'éclairage avec un contour prédéterminé pour la couche définie en dernier lieu, et on répète les deux dernières étapes, jusqu'à ce qu'un objet tridimensionnel de forme prédéterminée soit formé par la succession de couches durcies avec des contours prédéterminés par couches, dans lequel on applique une couleur sur au moins une couche à l'intérieur du contour prédéterminé, dans lequel la plate-forme de construction est suspendue de façon déplaçable et on conduit la plate-forme de construction après la polymérisation d'une couche dans une station de traitement pour la polymérisation d'une couche par déplacement vers une station d'application de couleur (30) comme autre station de traitement, dans laquelle on applique avec une sélection locale une couleur sur la couche formée en dernier lieu, la plate-forme de construction étant ensuite ramenée à la station de traitement pour la polymérisation d'une autre couche, **caractérisé en ce que** le déplacement de la plate-forme de construction entre différentes stations de traitement est effectué par rotation d'un support en forme de tambour (6) maintenant la plate-forme de construction à sa périphérie autour d'un axe de rotation horizontal ou vertical, les stations de traitement étant disposées de façon répartie dans le sens de rotation autour de l'axe de rotation du support.

2. Procédé de création d'un objet tridimensionnel selon la revendication 1, **caractérisé en ce que** l'application de la couleur est effectuée avec des couleurs variables selon une dépendance de localisation prédéterminée à l'intérieur du contour prédéterminé.

3. Procédé de création d'un objet tridimensionnel selon l'une quelconque des revendications précédentes, **caractérisé en ce que** l'application de la couleur sur une couche est effectuée après sa polymérisation et avant l'application d'une autre couche.

4. Procédé de création d'un objet tridimensionnel selon l'une quelconque des revendications précédentes, **caractérisé en ce que** l'application de la couleur est effectuée par une imprimante couleurs directement sur la couche.

5. Procédé selon la revendication 1, 2 ou 3, **caractérisé en ce que** l'application de la couleur est effectuée indirectement par un procédé de transfert de film, dans lequel la couleur est d'abord appliquée avec une sélection locale sur un film et est transférée de celui-ci à la couche à colorer.

6. Procédé selon l'une quelconque des revendications précédentes, **caractérisé en ce que** l'on polymérise le matériau photopolymérisable sur le côté inférieur de la plate-forme de construction par éclairage inférieur à travers un fond de cuve transparent, **en ce que** l'on soulève la plate-forme de construction par rapport au fond de cuve selon chaque étape d'éclairage et **en ce que** l'on ajuste le matériau photopolymérisable pour la définition d'une autre couche.

7. Procédé de création d'un objet tridimensionnel selon la revendication 6, **caractérisé en ce que**, après l'ajustement de matériau photopolymérisable, on abaisse la plate-forme de construction, le cas échéant avec les couches formées sur elle, de nouveau dans le matériau photopolymérisable rechargé, de telle manière qu'une couche de matériau photopolymérisable d'épaisseur prédéterminée soit définie par le réglage de la distance de la dernière couche durcie au-dessus du fond de cuve.

8. Procédé de création d'un objet tridimensionnel selon l'une quelconque des revendications précédentes, **caractérisé en ce que** l'on fait tourner la plate-forme de construction, après la polymérisation d'une couche dans la station de traitement pour l'application et la polymérisation, par rotation du support en forme de tambour (6) d'abord jusqu'à une station de nettoyage (20) comme station de traitement suivante, dans laquelle on enlève le matériau photopolymérisable excédentaire, qui n'a pas été durci dans la dernière étape d'éclairage, avant de la déplacer jusqu'à la station d'application de couleur (30) comme station de traitement suivante.

9. Procédé de création d'un objet tridimensionnel selon la revendication 8, **caractérisé en ce que** l'on fait tourner la plate-forme de construction, après l'application de couleur dans la station d'application de couleur (30), par rotation du support en forme de tambour (6) jusqu'à une station de fixation de la couleur (40) comme station de traitement suivante, dans laquelle on fixe la couleur appliquée par solidification, avant de faire tourner la plate-forme de construction de nouveau jusqu'à la station de traitement pour l'application et la polymérisation d'une couche, où on définit et on polymérise une autre couche de matériau photopolymérisable.

10. Procédé selon la revendication 1, **caractérisé en ce que** l'on opère le déplacement de la plate-forme de construction entre deux stations de traitement par rotation du support (6) maintenant la plate-forme de construction autour de son axe de rotation vertical et on opère le déplacement entre deux autres stations de traitement par rotation de 180° de la plate-forme de construction autour d'une suspension au support (6) avec un axe de rotation horizontal perpendiculaire à l'axe de rotation vertical du support (6), de telle manière qu'il se produise successivement un traitement avec une orientation vers le bas et vers le haut.

11. Procédé selon la revendication 10, **caractérisé en ce que** l'on crée un objet tridimensionnel respectivement sur les deux surfaces opposées de la plate-forme de construction et **en ce que** le traitement des deux objets tridimensionnels par le bas et par le haut est effectué simultanément.

12. Procédé selon l'une des revendications 10 à 11, **caractérisé en ce qu'**une autre plate-forme de construction est suspendue de façon rotative en compagnie de la première plate-forme de construction au support en forme de tambour, à distance de la première plate-forme de construction dans la direction périphérique de celui-ci, de telle manière que l'autre plate-forme de construction se trouve dans la station de nettoyage ou d'application de couleur lorsque la première plate-forme de construction se trouve dans une station de définition d'une autre couche.

13. Procédé selon la revendication 9, **caractérisé en ce que** plusieurs plates-formes de construction réparties autour de l'axe de rotation dans la direction périphérique sont suspendues au support en forme de tambour (6), de telle manière que, lorsque la première plate-forme de construction (1) se trouve dans la station de traitement pour la polymérisation d'une autre couche en face d'une unité d'éclairage, une deuxième plate-forme de construction (2) se trouve dans la station de nettoyage (20) comme station de traitement, une troisième plate-forme de construction (3) se trouve dans la station d'application de couleur (30) comme autre station de traitement et une quatrième plate-forme de construction (4) se trouve dans la station de fixation de la couleur (40) comme station de traitement.

14. Procédé selon la revendication 13, **caractérisé en ce que** l'on opère le traitement des quatre objets tridimensionnels apparaissant sur les quatre plates-formes de construction temporellement en parallèle par éclairage, par nettoyage dans la station de nettoyage (20), par application de couleur dans la station d'application de couleur (30) et par durcissement de la couleur dans la station de fixation de la couleur (40).

15. Procédé selon l'une quelconque des revendications précédentes, **caractérisé en ce que** dans la région de surplombs où la couche actuellement à durcir est saillante au-dessus de la dernière couche formée, on recouvre la région surplombante par un matériau absorbant dans le domaine de longueur d'onde de l'éclairage, pour éviter des polymérisations derrière la couche actuellement à durcir.

16. Procédé selon l'une quelconque des revendications précédentes, **caractérisé en ce que** l'on porte le matériau polymérisable à une hauteur désirée au-dessus du fond de cuve avant l'éclairage d'une autre couche, du fait que l'on règle l'épaisseur de couche désirée au moyen d'une racle ou d'un procédé d'enduction centrifuge, de telle manière qu'il ne se produise aucun déplacement notable de matériau lors de la descente de la plate-forme de construction vers le fond de cuve pour la définition de la couche à durcir.

17. Procédé selon l'une quelconque des revendications 1 à 6, **caractérisé en ce que**, pour l'application d'une autre couche en matériau photopolymérisable sur la plate-forme de construction ou sur la couche durcie en dernier lieu sur celle-ci, on applique un procédé indirect par transfert de film, dans lequel on définit une couche en matériau photopolymérisable avec l'épaisseur désirée sur un film et on transporte de nouveau le film pour transférer la couche définie sur celui-ci sur la plate-forme de construction ou sur la couche durcie en dernier lieu sur celle-ci et pour le durcir par éclairage.
